# FASCICULE DE BREVET EUROPEEN

(11) **EP 3 745 010 B1**
(45) Date de publication et mention de la délivrance du brevet: **03.09.2025**
(21) Numéro de dépôt: 20171649.5
(22) Date de dépôt: 27.04.2020
(51) Int. Cl.: F16K 31/06, B60S 1/48, B60S 1/58

(54) **DISTRIBUTEUR FLUIDIQUE POUR UN SYSTEME DE DISTRIBUTION DE FLUIDE POUR VEHICULE ET PROCEDE D'EJECTION D'UN FLUIDE UTILISANT UN TEL SYSTEME**
FLUIDVERTEILER FÜR EIN FLUIDVERTEILUNGSSYSTEM FÜR FAHRZEUGE, UND AUSSTOSSVERFAHREN EINES FLUIDS MITHILFE EINES SOLCHEN SYSTEMS
FLUID DISPENSER FOR A SYSTEM FOR DISPENSING A FLUID FOR A VEHICLE AND METHOD FOR EJECTION OF A FLUID USING SUCH A SYSTEM

(30) Priorité: 17.05.2019 FR 1905174
(43) Date de publication de la demande: 02.12.2020
(73) Titulaire: A. Raymond et Cie, 38000 Grenoble (FR)
(72) Inventeur: GRETHER, Urs, 79539 LOERRACH (DE); BARON, Stéphane, 68510 MAGSTASTT LE BAS (FR)
(74) Mandataire: IP Trust

(56) Documents cités:
- EP-A1- 0 250 298
- WO-A1-2018/188823
- WO-A1-2019/029915
- JP-A- S63 303 278
- US-A- 4 181 154

## Description

### DOMAINE DE L'INVENTION

La présente invention concerne un distributeur fluidique particulièrement adapté pour un système de distribution d'un fluide, par exemple un produit nettoyant, dans un véhicule automobile.

### ARRIERE PLAN TECHNOLOGIQUE DE L'INVENTION

Avec le développement des véhicules automobiles autonomes, un nombre croissant de caméras et de capteurs est incorporé dans les véhicules pour analyser leur environnement et assister la conduite. Ces caméras et capteurs sont disposés en de multiples points sur le pourtour du véhicule et doivent être régulièrement nettoyés pour garantir la fiabilité de l'assistance. Il est important que l'activation du nettoyage puisse être commandée sur demande et indépendamment pour chaque caméra ou capteur, de manière à ne pas fragiliser l'assistance et à conserver un bon contrôle du véhicule.

On connaît de l'état de la technique, le document WO2018188823 qui propose une ligne de distribution de liquide nettoyant dans un véhicule destinée à alimenter une pluralité de buses d'éjection dudit liquide. La ligne de distribution est équipée d'une pluralité de valves, chacune étant associée à une buse et commandée électriquement dans un état ouvert ou dans un état fermé par une unité de contrôle, de manière à alimenter la buse ou au contraire à bloquer l'alimentation en liquide de ladite buse. Une telle configuration de ligne de distribution permet une alimentation individuelle et indépendante de chaque buse. Par contre, elle nécessite une forte longueur linéaire de ligne de distribution pour acheminer le liquide jusqu'à chaque buse du véhicule.

Pour limiter la longueur de la ligne de distribution, le document WO2019029915 propose une ligne de distribution de liquide unique, positionnée le long de tous les points du véhicule nécessitant une buse d'éjection. Chaque buse comprend des organes de raccordement hydraulique sur la ligne de distribution et un dispositif d'actionnement, tel qu'une électrovanne, commandé électriquement dans un état ouvert ou dans un état fermé de manière à ouvrir ou respectivement fermer la communication fluidique entre la ligne de distribution et la buse. L'inconvénient de cette solution est que chaque buse doit être combinée avec un dispositif d'actionnement, ce qui n'est pas économique. De plus, l'espace occupé par chaque buse est relativement important du fait du dispositif d'actionnement associé.

Le document JPS63303278 propose une valve de commutation à 4 voies qui opère avec une faible force de commutation, mais qui reste complexe dans sa structure.

### OBJET DE L'INVENTION

La présente invention propose une solution alternative aux solutions de l'état de la technique, visant à limiter la longueur de la ligne de distribution de fluide et à simplifier l'actionnement des dispositifs d'éjection. Elle concerne en particulier un distributeur fluidique qui permet de simplifier l'actionnement des dispositifs d'éjection et qui est notamment adapté pour un système de distribution d'un fluide pour véhicule dont l'architecture permet de limiter la longueur de ligne de distribution. L'invention concerne également un procédé d'éjection d'un fluide utilisant un tel système de distribution.

### BREVE DESCRIPTION DE L'INVENTION

L'invention concerne un distributeur fluidique selon la revendication 1.

Selon d'autres caractéristiques avantageuses et non limitatives de l'invention, prises seules ou selon toute combinaison techniquement réalisable :
- la pression déterminée est comprise entre 1 bar and 15 bars ;
- l'actionneur électromagnétique est raccordé à un connecteur électrique du distributeur et adapté pour commander le déplacement du piston dans sa position commutée ;
- les premier et deuxième diaphragmes assurent l'étanchéité respectivement entre un corps central du distributeur et la première voie de communication fluidique, et entre le corps central et la deuxième voie de communication fluidique ;
- le distributeur fluidique comprend :
   ∘ un corps central dans lequel sont disposés l'actionneur et un connecteur électrique,
   ∘ un premier corps comprenant la première sortie et tout ou partie de la première voie de communication fluidique,
   ∘ un deuxième corps comprenant la deuxième sortie et tout ou partie de la deuxième voie de communication fluidique ; l'entrée du distributeur étant comprise dans le premier corps, dans le deuxième corps ou dans le corps central ;
- l'entrée et les deux sorties présentent chacune un axe central, les axes centraux de l'entrée et des deux sorties sont disposés dans un même plan ;
- le connecteur électrique est disposé dans le même plan que les axes centraux des entrée et sorties ;
- le premier corps et le deuxième corps sont identiques ;
- le corps central, le premier corps et le deuxième corps sont composés de matière plastique moulée ;
- l'entrée et les deux sorties présentent chacune un embout de connexion fluidique rapide, de type mâle ou de type femelle.

La présente invention concerne également un système de distribution d'un fluide dans un véhicule comprenant :
- une pluralité n de dispositifs d'éjection du fluide, indépendants ;
- une pluralité n-1 de distributeurs fluidiques, tels que ci-dessus, chacun étant configuré pour établir une connexion fluidique soit entre l'entrée et la première sortie, soit entre l'entrée et la deuxième sortie, respectivement dans un état initial et dans un état commuté ;
- des moyens d'amenée du fluide pour connecter un réservoir de fluide aux n dispositifs d'éjection, par l'intermédiaire des n-1 distributeurs fluidiques.

Selon d'autres caractéristiques avantageuses et non limitatives de l'invention, prises seules ou selon toute combinaison techniquement réalisable :
- les moyens d'amenée du fluide comprennent :
   ∘ un conduit principal d'amenée de fluide pour connecter l'entrée d'un premier distributeur à une pompe reliée à un réservoir de fluide ;
   ∘ une pluralité de conduits de sortie de fluide pour connecter chaque dispositif d'éjection à une sortie d'un distributeur ;
   ∘ au moins un conduit intermédiaire pour connecter au moins une sortie d'un distributeur et l'entrée d'un distributeur consécutif ;
- les dispositifs d'éjection sont des buses à jet, des buses télescopiques ou des buses oscillantes.

L'invention concerne enfin un procédé d'éjection d'un fluide au niveau d'un dispositif d'éjection, utilisant le système de distribution de fluide tel que ci-dessus, comprenant les étapes suivantes :
- activer un actionneur d'au moins un distributeur pour commander ce dernier dans son état commuté, de manière à mettre en communication fluidique le conduit principal d'amenée de fluide et le dispositif d'éjection ;
- actionner la pompe pour mettre le fluide sous pression dans le système de distribution et à l'éjecter par ledit dispositif d'éjection ;
- désactiver l'actionneur, alors que l'éjection du fluide s'opère.

Le procédé d'éjection d'un fluide au niveau d'un dispositif d'éjection comprend avantageusement l'étape suivante :
- arrêter la pompe pour que la pression du fluide dans le système de distribution soit inférieure à une pression déterminée, pour arrêter l'éjection de fluide au niveau du dispositif d'éjection et pour ramener la pluralité n-1 de distributeurs dans leur état initial.

### BREVE DESCRIPTION DES FIGURES

D'autres caractéristiques et avantages de l'invention ressortiront de la description détaillée de l'invention qui va suivre en référence aux figures annexées sur lesquelles :

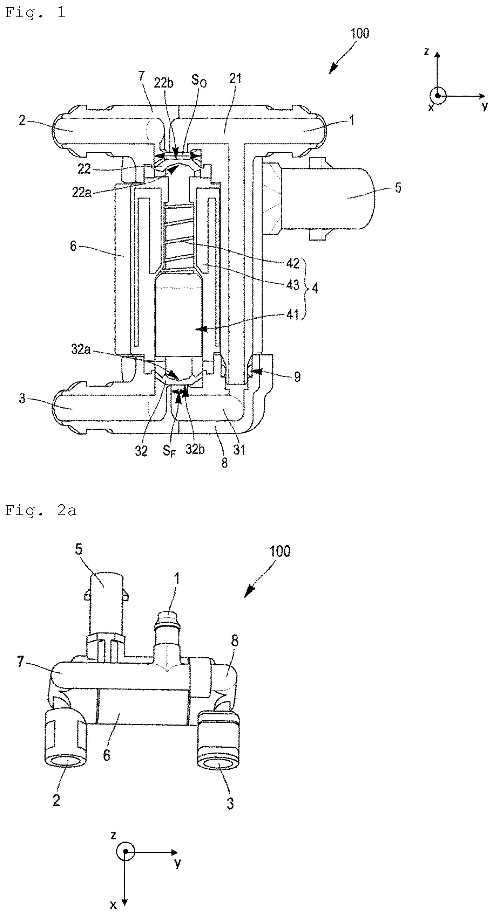

[Fig. 1] La figure 1 présente un distributeur fluidique conforme à la présente invention ;
[Fig. 2a]
[Fig. 2b]

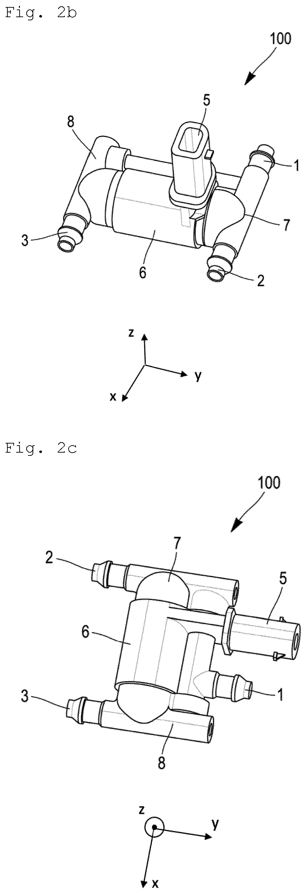

[Fig. 2c] Les figures 2a, 2b et 2c présentent différents modes de réalisation d'un distributeur fluidique conforme à l'invention ;
[Fig. 3a]
[Fig. 3b] Les figures 3a et 3b présentent deux illustrations schématiques de systèmes de distribution d'un fluide, conformes à la présente invention, incluant une pluralité de distributeurs fluidiques ;
[Fig. 4] La figure 4 présente une illustration schématique d'un système de distribution d'un fluide dans un véhicule, conforme à la présente invention.

### DESCRIPTION DETAILLEE DE L'INVENTION

Dans la partie descriptive, les mêmes références sur les figures pourront être utilisées pour des éléments de même type. Les figures sont des représentations schématiques qui, dans un objectif de lisibilité, ne sont pas nécessairement à l'échelle.

La présente invention concerne un distributeur fluidique 100 comprenant une entrée de fluide 1 et deux sorties 2,3, et susceptible d'être dans deux états distincts : un état dit initial et un état dit commuté. Sa dénomination de distributeur vient du fait qu'il est configuré pour établir une connexion fluidique soit entre l'entrée 1 et la première sortie 2, soit entre l'entrée 1 et la deuxième sortie 3, respectivement dans son état initial et dans son état commuté.

Comme représenté sur la figure 1, le distributeur fluidique 100 comprend une première voie de communication fluidique 21 reliant la première sortie 2 et l'entrée 1. Il comprend également une deuxième voie de communication fluidique 31 reliant la deuxième sortie 3 et l'entrée 1.

Le distributeur fluidique 100 comprend en outre un actionneur 4 incluant un piston mobile 41 apte à se déplacer entre une position initiale (qui correspond à l'état initial du distributeur 100) et une position commutée (qui correspond à l'état commuté du distributeur 100).

Le distributeur fluidique 100 comprend enfin deux diaphragmes 22,32 déformables disposés de part et d'autre du piston mobile 41. Sans que cela soit limitatif, les diaphragmes 22,32 pourront être formés en un matériau de la famille des élastomères, par exemple en EPDM (Ethylène Propylène Diène Monomère) ou en EPDM renforcé avec des fibres de verre ou encore en silicone EPDM. Un premier diaphragme 22 présente une face 22a en contact avec une première extrémité du piston 41 et une autre face 22b destinée à être en contact avec le fluide. Le premier diaphragme 22 est configuré pour obturer la première voie de communication fluidique 21 lorsque le piston 41 est dans sa position commutée et pour autoriser une communication fluidique entre l'entrée 1 et la première sortie 2, via la première voie 21 lorsque le piston 41 est dans sa position initiale.

Un deuxième diaphragme 32 présente une face 32a en contact avec une deuxième extrémité du piston 41 et une autre face 32b destinée à être en contact avec le fluide. Le deuxième diaphragme 32 est configuré pour obturer la deuxième voie de communication fluidique 31 lorsque le piston 41 est dans sa position initiale, et pour autoriser une communication fluidique entre l'entrée 1 et la deuxième sortie 3, via la deuxième voie 31 lorsque le piston 41 est dans sa position commutée.

On comprend ainsi que, lorsque le distributeur 100 est dans son état initial, le piston 41 de l'actionneur 4 étant dans sa position initiale, le fluide peut transiter de l'entrée 1 jusqu'à la première sortie 2 à travers la première voie de communication fluidique 21, mais ne peut pas atteindre la deuxième sortie 3 ; et lorsque le distributeur 100 est dans son état commuté, le piston 41 étant dans sa position commutée, le fluide peut transiter de l'entrée 1 jusqu'à la deuxième sortie 3 à travers la deuxième voie de communication fluidique 31, mais ne peut pas atteindre la première sortie 2.

Selon l'invention, la surface de contact S_{f} avec le fluide du deuxième diaphragme 32 est inférieure à la surface de contact Sₒ du premier diaphragme 22, lorsque le piston 41 est en position initiale (comme par exemple illustré sur la figure 1). Corrélativement, la surface de contact avec le fluide du premier diaphragme 22 est inférieure à celle du deuxième diaphragme 32, lorsque le piston 41 est en position commutée.

Pour cela, l'exemple de distributeur 100 présenté en figure 1 propose une configuration particulière des voies de communication fluidique 21,31. Nous décrirons ici la configuration de la première voie 21, laquelle configuration s'applique de manière identique à la deuxième voie 31. La première voie 21 comprend :
- un tronçon amont, établissant la communication fluidique depuis l'entrée 1 jusqu'à un logement intermédiaire dans lequel est disposé le diaphragme 22 mobile,
- un tronçon aval, établissant la communication fluidique depuis le logement intermédiaire jusqu'à la première sortie 2,
- le logement intermédiaire dont la section dans le plan (x,y) (selon le repère (x,y,z) utilisé sur la figure 1) est supérieure aux sections, dans ce même plan, des tronçons amont et aval débouchant dans ledit logement intermédiaire.

Au niveau de son extrémité débouchant dans le logement intermédiaire, le tronçon amont forme un conduit dont l'axe central est sensiblement aligné avec le centre du premier diaphragme 22 et sensiblement normal à la face 22b dudit diaphragme 22. Le tronçon aval forme un conduit, au niveau de son extrémité débouchant dans le logement intermédiaire, décalé par rapport au centre du premier diaphragme 22 et sensiblement normal à la face 22b dudit diaphragme 22 (figure 1).

Lorsque le distributeur 100 est dans son état initial (correspondant à la position initiale du piston 41 de l'actionneur 4), le premier diaphragme 22 est « au repos », non déformé car il n'est pas poussé par le piston 41 : il autorise donc le fluide à transiter depuis le tronçon amont, dans le logement intermédiaire et dans le tronçon aval. La communication fluidique est ainsi établie depuis l'entrée 1 jusqu'à la première sortie 2 via la première voie de communication fluidique 21. La surface Sₒ de la face 22b du premier diaphragme 22 en contact avec le fluide est typiquement égale à la section, dans le plan (x,y), du logement intermédiaire. Parallèlement, le deuxième diaphragme 32 est poussé et déformé par le piston 41 : il est ainsi plaqué contre l'extrémité du tronçon amont (de la deuxième voie 31) débouchant dans le logement intermédiaire (de la deuxième voie 31) et obture la communication fluidique entre ledit tronçon amont et ledit logement intermédiaire (figure 1) ; en d'autres termes, il obture la deuxième voie 31 et coupe la communication fluidique entre l'entrée 1 et la deuxième sortie 3. Dans l'état initial, la surface S_{f} de la face 32b du deuxième diaphragme 32 en contact avec le fluide est typiquement égale à la section, dans le plan (x,y), du conduit à l'extrémité débouchant dans le logement intermédiaire du tronçon amont de la deuxième voie 31. Comme énoncé précédemment, lorsque le distributeur 100 est dans son état initial, la surface Sₒ en contact avec le fluide de la face 22b du premier diaphragme 22 est plus grande que la surface S_{f} en contact avec le fluide de la face 32b du deuxième diaphragme 32.

Lorsque le distributeur 100 est dans son état commuté (correspondant à la position commutée du piston 41), le premier diaphragme 22 est poussé et déformé par le piston 41, et vient se plaquer contre l'extrémité du tronçon amont (de la première voie 21) débouchant dans le logement intermédiaire (de la première voie 21) et ainsi obturer la communication fluidique entre ledit tronçon amont et ledit logement intermédiaire ; en d'autres termes, il obture la première voie 21 et coupe la communication fluidique entre l'entrée 1 et la première sortie 2. Dans cet état commuté, la surface de la face 22b du premier diaphragme 22 en contact avec le fluide est typiquement égale à la section, dans le plan (x,y), du conduit à l'extrémité débouchant dans le logement intermédiaire du tronçon amont de la première voie 21. Parallèlement, le deuxième diaphragme 32 est « au repos », non déformé car il n'est pas poussé par le piston 41 : il laisse donc le fluide transiter depuis le tronçon amont, dans le logement intermédiaire et dans le tronçon aval (de la deuxième voie 31). La communication fluidique est ainsi établie depuis l'entrée 1 jusqu'à la deuxième sortie 3 via la deuxième voie de communication fluidique 31.

Comme énoncé précédemment, lorsque le distributeur 100 est dans son état commuté, la surface en contact avec le fluide de la face 22b du premier diaphragme 22 est plus petite que la surface en contact avec le fluide de la face 32b du deuxième diaphragme 32.

De manière avantageuse, l'actionneur 4 est raccordé à un connecteur électrique 5 inclus dans le distributeur 100. Lorsqu'il est alimenté électriquement ou autrement dit lorsqu'il est activé, l'actionneur 4 permet de commander le déplacement du piston 41 mobile dans sa position commutée.

Selon l'invention, l'actionneur 4 est un actionneur électromagnétique comprenant une bobine 43 disposée autour du piston 41 : le champ magnétique qui s'établit lorsque l'actionneur 4 est alimenté électriquement génère le mouvement du piston 41 dans sa position commutée.

Notons que d'autres types d'actionneurs pourraient être utilisés comme par exemple des actionneurs à moteur linéaire. L'avantage d'un actionneur électromagnétique par rapport aux autres types d'actionneurs est qu'il constitue une solution simple et économique.

Dans l'exemple de distributeur 100 de la figure 1, la position commutée du piston 41 (non représentée) est celle dans laquelle il vient pousser et déformer le premier diaphragme 22, de manière à obturer la première voie de communication 21.

Lorsque le distributeur 100 est dans son état commuté et lorsque le fluide arrive sous pression à l'entrée 1 du distributeur 100, la force appliquée par le fluide sur la face 32b du deuxième diaphragme 32 est supérieure à la force appliquée sur la face 22b du premier diaphragme 22, car la surface en contact avec le fluide de la face 32b est supérieure à la surface en contact avec le fluide de la face 22b. Il est ainsi possible de désactiver l'actionneur 4 dès que la pression de fluide est établie à l'entrée du distributeur 100, la différence de surface en contact avec le fluide entre les deux diaphragmes 22,32 étant apte à maintenir le piston 41 dans sa position commutée (et donc à maintenir le distributeur 100 dans son état commuté). Cela procure une solution simple et économique pour l'actionnement du distributeur 100, ne sollicitant qu'une activation ponctuelle de l'actionneur 4.

Selon la présente invention, le distributeur fluidique 100 comprend un élément de rappel 42, tel que par exemple un ressort, pour ramener le piston 41 dans sa position initiale lorsque l'actionneur 4 est inactif et lorsque la pression du fluide à l'entrée du distributeur 100 est inférieure à une pression déterminée. Comme évoqué précédemment, quand l'actionneur 4 est inactif et que la pression de fluide est établie à l'entrée 1 du distributeur 100, la différence de surface en contact avec le fluide entre les deux diaphragmes 22,32 permet de maintenir le piston 41 dans son état commuté. Par pression de fluide établie, on entend une pression de fluide supérieure à une pression déterminée, qui pourra par exemple être comprise entre 1 bar et 15 bars.

En dessous de cette pression déterminée, la force appliquée par le fluide sur le premier diaphragme 22 ne va plus être suffisante pour contrecarrer la somme de la force appliquée par le fluide sur le deuxième diaphragme 32 et de la force de l'élément de rappel 42. Ainsi, lorsque la pression de fluide est inférieure à la pression déterminée, le piston 41 revient dans sa position initiale (correspondant à l'état initial du distributeur 100) : dans l'exemple de distributeur 100 de la figure 1, la position initiale du piston 41 (illustrée) est celle dans laquelle il vient pousser et déformer le deuxième diaphragme 32, de manière à obturer la deuxième voie de communication 31, alors que le premier diaphragme 22 est « au repos », non déformé, autorisant la communication fluidique dans la première voie 21.

Quand le distributeur 100 est dans son état initial, si la pression du fluide est établie au-delà de la pression déterminée, le distributeur 100 demeure naturellement dans son état initial du fait de la différence de surface en contact avec le fluide des deux diaphragmes 22, 32 : le fluide transite ainsi dans la première voie 21, entre l'entrée 1 et la première sortie 2 du distributeur 100.

Le distributeur 100 selon l'invention propose ainsi une solution simple et économique d'actionnement entre l'état initial et commuté et vice-versa. L'actionneur 4 est ponctuellement activé pour basculer dans l'état commuté, lequel état peut ensuite être maintenu, sans alimentation électrique, par la pression du fluide établie à l'entrée 1 du distributeur 100 au-delà d'une pression déterminée. Le retour à l'état initial peut être opéré par réduction de la pression de fluide en-dessous d'une pression déterminée.

Avantageusement, le premier diaphragme 22 assure l'étanchéité entre un corps central 6 du distributeur 100 et la première voie de communication fluidique 21 ; et le deuxième diaphragme 32 assure l'étanchéité entre le corps central 6 et la deuxième voie de communication fluidique 31. En particulier, la périphérie de chaque diaphragme 22,32 est configurée pour constituer un joint d'étanchéité fixe entre le corps central 6 et, respectivement, la première 21 et la deuxième 31 voies de communication fluidique. Le corps central 6 contient préférentiellement l'actionneur 4 et le connecteur électrique 5.

La configuration des diaphragmes 22,32 permet de garantir que le fluide n'atteint pas les composants de l'actionneur 4, et ce, sans joint d'étanchéité mobile. La fiabilité et la durée de vie de l'actionneur 4 est ainsi grandement augmentée.

De manière avantageuse, le distributeur 100 est formé de trois corps 6,7,8 distincts (figure 1, 2a, 2b, 2c). Le corps central 6 est disposé en partie centrale du distributeur 100 et abrite l'actionneur 4 et le connecteur électrique 5. Un premier corps 7 comprend la première sortie 2 et tout ou partie de la première voie de communication fluidique 21. Un deuxième corps 8 comprend la deuxième sortie 3 et tout ou partie de la deuxième voie de communication fluidique 31. L'entrée 1 du distributeur 100 peut être comprise dans le premier corps 7 (figures 1, 2a, 2b), dans le deuxième corps 8 ou dans le corps central 6 (figure 2c). Dans ce dernier cas de figure, l'entrée 1 de fluide et les parties des première et deuxième voies de communication fluidique comprises dans le corps central 6 sont bien-sûr isolées de la zone du corps central 6 abritant l'actionneur 4 et le connecteur électrique 5. Au moins un joint 9 est utilisé pour assurer l'étanchéité du raccordement d'une voie de communication fluidique (par exemple, la deuxième voie 31, comme illustré sur la figure 1), entre le premier corps 7 et le deuxième corps 8. Préférentiellement, les trois corps sont formés par moulage d'une matière plastique, choisie par exemple parmi les polyamides (PA66, PA12,...), le polyoxyméthylène (POM), les polyesters (polytéréphtalate de butylène (PBT), ...), etc.

L'entrée 1 et les deux sorties 2,3 du distributeur 100 présentent chacune un axe central.

Selon un mode de réalisation, les axes centraux des deux sorties 2,3 sont disposés dans un même plan (x,y) et l'axe central de l'entrée 1 est disposé dans un plan différent parallèle, comme illustré sur la figure 2a. Le connecteur électrique 5 peut être disposé dans le même plan (x,y) que les axes centraux des sorties 2,3, ou dans un plan différent, parallèle ou orthogonal.

Selon un autre mode de réalisation du distributeur 100, les axes centraux de l'entrée 1 et des deux sorties 2,3 sont disposés dans un même plan (x,y), comme illustré sur les figures 1, 2b, 2c. Le connecteur électrique 5 peut être disposé dans le même plan (x,y) que les axes centraux des entrée 1 et sorties 2,3 (figure 2c), ou dans un plan différent, par exemple un plan orthogonal (x,z) (figure 2b).

Selon encore un autre mode de réalisation du distributeur 100, le premier corps 7 et le deuxième corps 8 sont identiques (figure 2c). Avantageusement, dans ce mode de réalisation, le corps central 6 inclut l'entrée 1 du distributeur et une partie des première 21 et deuxième 31 voies de communication fluidique.

Dans l'un ou l'autre des modes de réalisation décrits ci-dessus, l'entrée 1 et les deux sorties 2,3 du distributeur 100 présentent avantageusement chacune un embout de connexion fluidique rapide, de type mâle ou de type femelle, de manière à faciliter leur connexion à un système de distribution de fluide.

Le choix de l'un ou l'autre des modes de réalisation pour les distributeurs 100 qui seront incorporés dans le système de distribution de fluide dépend de l'espace disponible pour chaque distributeur et/ou des orientations et dispositions des conduits fluidiques ou fils électriques à raccorder audit distributeur pour former le système de distribution.

La présente invention concerne également un système de distribution 200 d'un fluide, particulièrement adapté à un véhicule.

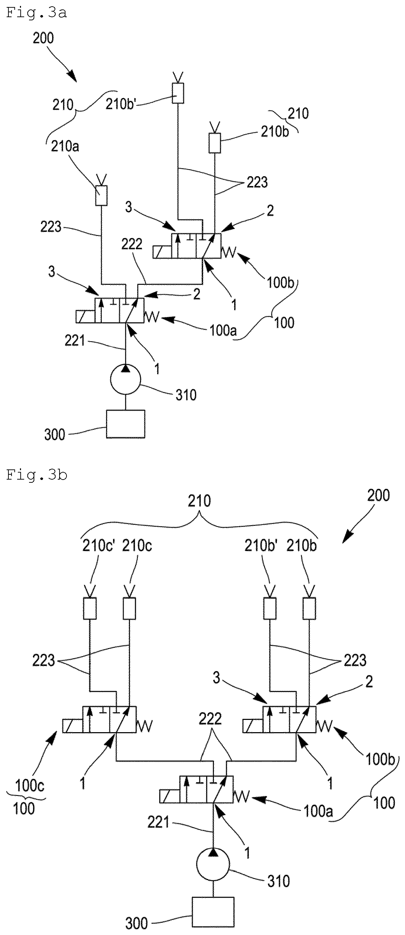

Le système de distribution 200 comprend une pluralité n de dispositifs d'éjection 210 du fluide indépendants (figures 3a, 3b). Par dispositif d'éjection de fluide, on entend tout type de dispositif par lequel le fluide est susceptible de sortir. Le caractère indépendant de chaque dispositif 210 correspond au fait que l'on peut commander l'éjection de fluide par ce dispositif 210, indépendamment des autres. Comme évoqué en introduction, chacun de ces dispositifs 210 vise par exemple à nettoyer la surface extérieure d'un capteur, dont la mesure est utilisée pour assister la conduite du véhicule.

Les dispositifs d'éjection 210 pourront par exemple être des buses à jet, des buses télescopiques ou des buses oscillantes. Notons que chaque dispositif d'éjection sera avantageusement muni d'une valve, par exemple formée d'une membrane silicone, apte à se déformer pour laisser passer le fluide sous pression et à se rétracter pour fermer le dispositif lorsque le fluide n'est pas sous pression.

Le système de distribution 200 comprend également une pluralité n-1 de distributeurs fluidiques 100, conformes à la description précédente. Chaque distributeur 100 est configuré pour établir une connexion fluidique soit entre l'entrée 1 et la première sortie 2, soit entre l'entrée 1 et la deuxième sortie 3, respectivement dans un état initial et dans un état commuté.

Le système de distribution 200 comprend enfin des moyens d'amenée du fluide pour connecter un réservoir 300 de fluide aux n dispositifs d'éjection, par l'intermédiaire des n-1 distributeurs fluidiques 100.

Le système de distribution 200 selon l'invention met en œuvre n-1 distributeurs 100 pour n dispositifs d'éjection 210 indépendants. Les distributeurs 100 ne sont pas nécessairement accolés aux buses 210, ce qui permet de limiter l'encombrement des dispositifs 210.

Selon un mode avantageux de mise en œuvre, illustré sur les figures 3a et 3b, les moyens d'amenée du fluide comprennent :
- un conduit principal d'amenée 221 de fluide pour connecter l'entrée 1 d'un premier distributeur 100a à une pompe 310 reliée à un réservoir 300 de fluide ;
- une pluralité de conduits de sortie 223 de fluide pour connecter chaque dispositif d'éjection 210 à une sortie 2,3 d'un distributeur 100 ;
- au moins un conduit intermédiaire 222 pour connecter au moins une sortie 2,3 d'un distributeur 100a et l'entrée 1 d'un distributeur consécutif 100b,100c.

Le conduit principal d'amenée 221, la pluralité de conduits de sortie 223 et le au moins un conduit intermédiaire 222 forment une ligne de distribution du fluide.

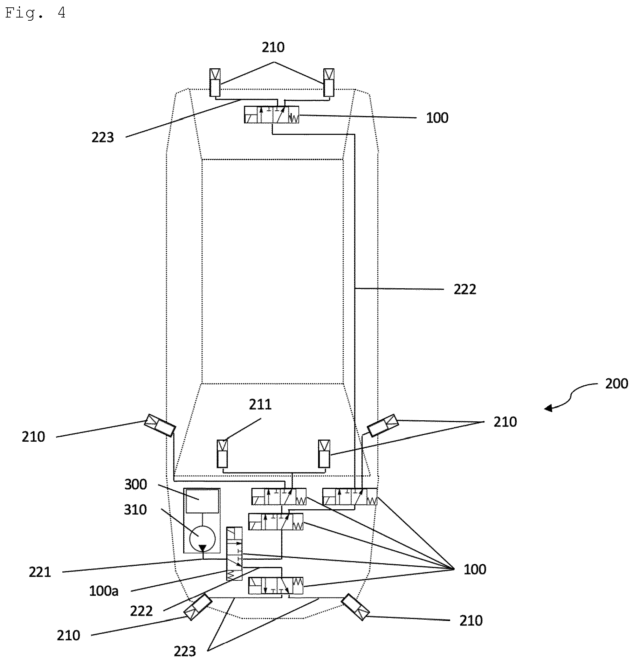

Le conduit principal d'amenée 221 et le au moins un conduit intermédiaire 222 forment avantageusement le « squelette » de la ligne de distribution, par exemple s'étendant sur le pourtour du véhicule de manière à acheminer le fluide vers chacun des points requis d'éjection de fluide. Les conduits de sortie 223 forment les ramifications alimentant chaque dispositif d'éjection 210 indépendant. Le système de distribution 200 selon l'invention permet ainsi de réduire la longueur de ligne de distribution. Dans l'exemple illustré sur la figure 4, le système de distribution 200 comprend six distributeurs 100, sept dispositifs d'éjection 210 indépendants et un dispositif d'éjection 211 dépendant ; l'éjection de fluide au niveau du dispositif d'éjection dépendant 211 sera simultanée avec l'éjection de l'un des dispositifs 210 indépendants, les deux dispositifs 210,211 étant reliés à la même sortie 2 d'un distributeur 100.

L'invention concerne enfin un procédé d'éjection d'un fluide au niveau d'un dispositif d'éjection 210, utilisant le système de distribution de fluide 200 décrit ci-dessus.

Lorsqu'il est nécessaire d'éjecter du fluide, par exemple au niveau d'un dispositif 210c' illustré sur la figure 3b, le procédé d'éjection comprend une première étape d'activation de l'actionneur 4 du premier distributeur 100a et de l'actionneur 4 d'un deuxième distributeur 100c adjacent, pour commander lesdits distributeurs 100a,100c dans leur état commuté. Dans son état commuté, le premier distributeur 100a va établir une connexion fluidique entre son entrée 1 et sa deuxième sortie 3 ; et dans son état commuté, le distributeur 100c adjacent va établir une connexion fluidique entre son entrée 1 et sa deuxième sortie 3. Ainsi, le système de distribution 200 est dans une configuration permettant une communication fluidique entre le conduit principal d'amenée de fluide 221 et le dispositif d'éjection 210c'.

Le procédé d'éjection selon l'invention comprend ensuite une deuxième étape d'actionnement de la pompe 310 pour mettre le fluide sous pression dans la ligne de distribution 221,222,223 et à l'éjecter par ledit dispositif 210c'. Comme énoncé précédemment, la pression du fluide est supérieure à une pression déterminée.

Le procédé d'éjection comprend enfin une troisième étape de désactivation de l'actionneur 4, alors que l'éjection du fluide s'opère par le dispositif 210c'. Comme énoncé précédemment, il n'est pas nécessaire de maintenir l'actionneur 4 actif car dès l'instant où la pression de fluide est au-delà de la pression déterminée, le distributeur 100 est configuré pour demeurer dans l'état commuté.

Pour arrêter l'éjection de fluide au niveau du dispositif 210c' et pour ramener les distributeurs 100a et 100c dans leur état initial, le procédé d'éjection comprend en outre une quatrième étape d'arrêt de la pompe 310 pour que la pression du fluide dans la ligne de distribution 221,222,223 soit inférieure à la pression déterminée. Les distributeurs 100a,100c reviennent alors dans leur état initial.

Ce même procédé peut ensuite être mis en œuvre pour éjecter du fluide au niveau d'un autre dispositif 210c, 210b', 210b parmi la pluralité n de dispositifs 210.

La commande des actionneurs 4 de la pluralité n-1 de distributeurs 100 et la commande de la pompe peut être opérée par l'ordinateur de bord.

Le distributeur 100, le système de distribution de fluide 200 et le procédé d'éjection selon l'invention peuvent être avantageusement utilisés dans un véhicule pour distribuer et alimenter des dispositifs d'éjection de liquide de nettoyage par exemple.

Ils peuvent également être utilisés pour la distribution d'autres types de fluides, par exemple de l'air, de l'essence ou de l'huile, dans d'autres systèmes par exemple du domaine automobile.

Bien entendu, l'invention n'est pas limitée aux modes de mise en œuvre et exemples décrits, et on peut y apporter des variantes de réalisation sans sortir du cadre de l'invention tel que défini par les revendications.

## Revendications

1. Distributeur fluidique (100) comprenant :
- une entrée de fluide (1),
- une première sortie (2) et une première voie de communication fluidique (21) entre l'entrée (1) et ladite première sortie (2),
- une deuxième sortie (3) et une deuxième voie de communication fluidique (31) entre l'entrée (1) et ladite deuxième sortie (3),
le distributeur (100) étant configuré pour établir une connexion fluidique, soit entre l'entrée de fluide (1) et la première sortie (2), soit entre l'entrée de fluide (1) et la deuxième sortie (3), et comprenant en outre :
- un actionneur (4) comprenant un piston (41) mobile apte à se déplacer entre une position initiale et une position commutée, le piston (41) étant disposé entre un premier (22) et un deuxième (32) diaphragmes déformables ;
- le premier diaphragme (22), dont une face (22a) est en contact avec une première extrémité du piston (41) et dont l'autre face (22b) est destinée à être en contact avec le fluide, configuré pour obturer la première voie (21) lorsque le piston (41) est dans sa position commutée, la première voie (21) étant ouverte lorsque le piston (41) est dans sa position initiale ;
- le deuxième diaphragme (32), dont une face (32a) est en contact avec une deuxième extrémité du piston (41) et dont l'autre face (32b) est destinée à être en contact avec le fluide, configuré pour obturer la deuxième voie (31) lorsque le piston (41) est dans sa position initiale ; la deuxième voie (31) étant ouverte lorsque le piston (41) est dans sa position commutée ;
- un élément de rappel (42) pour ramener le piston (41) dans sa position initiale lorsque l'actionneur (4) est inactif et lorsque la pression du fluide à l'entrée du distributeur (100) est inférieure à une pression déterminée;
dans lequel la surface de contact avec le fluide du premier diaphragme (22) est inférieure à celle du deuxième diaphragme (32) lorsque le piston (41) est en position commutée, et la surface de contact avec le fluide du deuxième diaphragme (32) est inférieure à celle du premier diaphragme (22) lorsque le piston (41) est en position initiale ;
et dans lequel la différence de surface en contact avec le fluide entre les deux diaphragmes (22,32) permet de maintenir le piston (41) dans son état commuté, lorsque l'actionneur (4) est inactif et lorsque la pression du fluide à l'entrée du distributeur (100) est supérieure à ladite pression déterminée;
le distributeur fluidique étant **caractérisé en ce que** l'actionneur (4) est un actionneur électromagnétique comprenant une bobine (43) disposée autour du piston (41) .

2. Distributeur fluidique (100) selon la revendication précédente, dans lequel la pression déterminée est comprise entre 1 bar and 15 bars.

3. Distributeur fluidique (100) selon l'une des revendications précédentes, dans lequel l'actionneur électromagnétique (4) est raccordé à un connecteur électrique (5) du distributeur (100) et adapté pour commander le déplacement du piston (41) dans sa position commutée.

4. Distributeur fluidique (100) selon l'une des revendications précédentes, dans lequel les premier (22) et deuxième (32) diaphragmes assurent l'étanchéité respectivement entre un corps central (6) du distributeur et la première voie de communication fluidique (21), et entre le corps central (6) et la deuxième voie de communication fluidique (31).

5. Distributeur fluidique (100) selon la revendication précédente, comprenant :
- le corps central (6) dans lequel sont disposés l'actionneur (4) et un connecteur électrique (5),
- un premier corps (7) comprenant la première sortie (2) et tout ou partie de la première voie de communication fluidique (21),
- un deuxième corps (8) comprenant la deuxième sortie (3) et tout ou partie de la deuxième voie de communication fluidique (31),
l'entrée (1) du distributeur étant comprise dans le premier corps (7), dans le deuxième corps (8) ou dans le corps central (6).

6. Distributeur fluidique (100) selon la revendication précédente, dans lequel l'entrée (1) et les deux sorties (2,3) présentent chacune un axe central, les axes centraux de l'entrée et des deux sorties sont disposés dans un même plan.

7. Distributeur fluidique (100) selon la revendication précédente, dans lequel le connecteur électrique (5) est disposé dans le même plan que les axes centraux des entrée (1) et sorties (2,3).

8. Distributeur fluidique (100) selon l'une des trois revendications précédentes, dans lequel le premier corps (7) et le deuxième corps (8) sont identiques.

9. Distributeur fluidique (100) selon l'une des revendications 5 à 8, dans lequel le corps central (6), le premier corps (7) et le deuxième corps (8) sont composés de matière plastique moulée.

10. Distributeur fluidique (100) selon l'une des revendications précédentes, dans lequel l'entrée (1) et les deux sorties (2,3) présentent chacune un embout de connexion fluidique rapide, de type mâle ou de type femelle.

11. Système de distribution (200) d'un fluide dans un véhicule comprenant :
- une pluralité n de dispositifs d'éjection (210) du fluide indépendants ;
- une pluralité n-1 de distributeurs fluidiques (100), conformes à l'une des revendications précédentes, chacun étant configuré pour établir une connexion fluidique soit entre l'entrée (1) et la première sortie (2), soit entre l'entrée (1) et la deuxième sortie (3), respectivement dans un état initial et dans un état commuté ;
- des moyens d'amenée du fluide pour connecter un réservoir (300) de fluide aux n dispositifs d'éjection, par l'intermédiaire des n-1 distributeurs fluidiques (100).

12. Système de distribution (200) d'un fluide selon la revendication précédente, dans laquelle les moyens d'amenée du fluide comprennent :
- un conduit principal d'amenée (221) de fluide pour connecter l'entrée (1) d'un premier distributeur (100a) à une pompe (310) reliée à un réservoir (300) de fluide ;
- une pluralité de conduits de sortie (223) de fluide pour connecter chaque dispositif d'éjection (210) à une sortie (2,3) d'un distributeur (100) ;
- au moins un conduit intermédiaire (222) pour connecter au moins une sortie (2,3) d'un distributeur (100a) et l'entrée (1) d'un distributeur consécutif (100b).

13. Système de distribution (200) d'un fluide selon l'une des deux revendications précédentes, dans lequel les dispositifs d'éjection (210) sont des buses à jet, des buses télescopiques ou des buses oscillantes.

14. Procédé d'éjection d'un fluide au niveau d'un dispositif d'éjection (210), utilisant le système de distribution de fluide (200) conforme à l'une des revendications 12 à 13, comprenant les étapes suivantes :
- activer un actionneur (4) d'au moins un distributeur (100) pour commander ce dernier dans son état commuté, de manière à mettre en communication fluidique le conduit principal d'amenée de fluide (221) et le dispositif d'éjection (210) ;
- actionner la pompe (310) pour mettre le fluide sous pression dans le système de distribution (200) et à l'éjecter par ledit dispositif d'éjection (210) ;
- désactiver l'actionneur (4), alors que l'éjection du fluide s'opère.

15. Procédé d'éjection d'un fluide au niveau d'un dispositif d'éjection (210) selon la revendication précédente, comprenant en outre l'étape suivante :
- arrêter la pompe (310) pour que la pression du fluide dans le système de distribution (200) soit inférieure à une pression déterminée, pour arrêter l'éjection de fluide au niveau du dispositif d'éjection (210) et pour ramener la pluralité n-1 de distributeurs (100) dans leur état initial.

## Patentansprüche

1. Fluidverteiler (100), umfassend:
- einen Fluideingang (1),
- einen ersten Ausgang (2) und einen ersten fluidischen Kommunikationsweg (21) zwischen dem Eingang (1) und dem ersten Ausgang (2),
- einen zweiten Ausgang (3) und einen zweiten fluidischen Kommunikationsweg (31) zwischen dem Eingang (1) und dem zweiten Ausgang (3),
wobei der Verteiler (100) so eingerichtet ist, dass er eine Fluidverbindung entweder zwischen dem Fluideingang (1) und dem ersten Ausgang (2) oder zwischen dem Fluideingang (1) und dem zweiten Ausgang (3) herstellt, und ferner umfassend:
- ein Stellglied (4), das einen beweglichen Kolben (41) umfasst, der sich zwischen einer Ausgangsstellung und einer geschalteten Stellung bewegen kann, wobei der Kolben (41) zwischen einer ersten (22) und einer zweiten (32) verformbaren Membran angeordnet ist;
- die erste Membran (22), deren eine Seite (22a) mit einem ersten Ende des Kolbens (41) in Kontakt ist und deren andere Seite (22b) dazu bestimmt ist, mit dem Fluid in Kontakt zu sein, die so eingerichtet ist, dass sie den ersten Weg (21) verschließt, wenn sich der Kolben (41) in seiner geschalteten Position befindet, wobei der erste Weg (21) geöffnet ist, wenn sich der Kolben (41) in seiner Ausgangsposition befindet;
- die zweite Membran (32), deren eine Seite (32a) mit einem zweiten Ende des Kolbens (41) in Kontakt ist und deren andere Seite (32b) dazu bestimmt ist, mit dem Fluid in Kontakt zu sein, die so eingerichtet ist, dass sie den zweiten Weg (31) verschließt, wenn sich der Kolben (41) in seiner Ausgangsstellung befindet; wobei der zweite Weg (31) geöffnet ist, wenn sich der Kolben (41) in seiner geschalteten Stellung befindet;
- ein Rückstellelement (42) zum Zurückstellen des Kolbens (41) in seine Ausgangsposition, wenn das Stellglied (4) inaktiv ist und wenn der Druck des Fluids am Eingang des Verteilers (100) unter einem bestimmten Druck liegt;
wobei die fluidkontaktierende Fläche der ersten Membran (22) kleiner ist als die der zweiten Membran (32), wenn sich der Kolben (41) in der geschalteten Position befindet, und die fluidkontaktierende Fläche der zweiten Membran (32) kleiner ist als die der ersten Membran (22), wenn sich der Kolben (41) in der Ausgangsposition befindet;
und wobei die Differenz der fluidkontaktierenden Fläche zwischen den beiden Membranen (22, 32) es ermöglicht, den Kolben (41) in seinem geschalteten Zustand zu halten, wenn das Stellglied (4) inaktiv ist und wenn der Druck des Fluids am Eingang des Verteilers (100) höher ist als der ermittelte Druck;
der Fluidverteiler ist **dadurch gekennzeichnet, dass** das Stellglied (4) ein elektromagnetisches Stellglied ist, das eine Spule (43) umfasst, die um den Kolben (41) angeordnet ist.

2. Fluidverteiler (100) nach dem vorhergehenden Anspruch, wobei der ermittelte Druck zwischen 1 bar und 15 bar liegt.

3. Fluidverteiler (100) nach einem der vorhergehenden Ansprüche, wobei das elektromagnetische Stellglied (4) mit einer elektrischen Steckverbindung (5) des Verteilers (100) verbunden ist und geeignet ist, um die Bewegung des Kolbens (41) in seine geschaltete Position zu steuern.

4. Fluidverteiler (100) nach einem der vorhergehenden Ansprüche, wobei die erste (22) und die zweite (32) Membran jeweils zwischen einem zentralen Körper (6) des Verteilers und dem ersten fluidischen Kommunikationsweg (21) und zwischen dem zentralen Körper (6) und dem zweiten fluidischen Kommunikationsweg (31) abdichten.

5. Fluidverteiler (100) nach dem vorhergehenden Anspruch, umfassend:
- den zentralen Körper (6), in dem das Stellglied (4) und ein elektrischer Steckverbinder (5) angeordnet sind,
- einen ersten Körper (7), umfassend den ersten Ausgang (2) und den gesamten oder einen Teil des ersten fluidischen Kommunikationswegs (21),
- einen zweiten Körper (8), umfassend den zweiten Ausgang (3) und den gesamten oder einen Teil des zweiten fluidischen Kommunikationswegs (31),
wobei der Eingang (1) des Verteilers in dem ersten Körper (7), in dem zweiten Körper (8) oder in dem zentralen Körper (6) enthalten ist.

6. Fluidverteiler (100) nach dem vorhergehenden Anspruch, wobei der Eingang (1) und die beiden Ausgänge (2,3) jeweils eine zentrale Achse aufweisen, wobei die zentralen Achsen des Eingangs und der beiden Ausgänge in einer Ebene angeordnet sind.

7. Fluidverteiler (100) nach dem vorhergehenden Anspruch, wobei die elektrische Steckverbindung (5) in derselben Ebene wie die zentralen Achsen der Eingänge (1) und Ausgänge (2,3) angeordnet ist.

8. Fluidverteiler (100) nach einem der drei vorhergehenden Ansprüche, wobei der erste Körper (7) und der zweite Körper (8) identisch sind.

9. Fluidverteiler (100) nach einem der Ansprüche 5 bis 8, wobei der zentrale Körper (6), der erste Körper (7) und der zweite Körper (8) aus geformtem Kunststoff bestehen.

10. Fluidverteiler (100) nach einem der vorhergehenden Ansprüche, wobei der Eingang (1) und die beiden Ausgänge (2, 3) jeweils ein Endstück für eine schnelle Fluidverbindung, entweder vom Steck-Typ oder vom Buchsen-Typ, aufweisen.

11. Verteilersystem (200) eines Fluids in einem Fahrzeug, umfassend:
- eine Vielzahl n von unabhängigen Fluidauswurfvorrichtungen (210);
- eine Vielzahl n-1 von Fluidverteilern (100), die einem der vorhergehenden Ansprüche entsprechen, wobei jeder so eingerichtet ist, dass er entweder in einem Ausgangszustand und in einem geschalteten Zustand eine Fluidverbindung zwischen dem Eingang (1) und dem ersten Ausgang (2) oder zwischen dem Eingang (1) und dem zweiten Ausgang (3) herstellt;
- Fluidzuführmittel, um einen Fluidbehälter (300) über die n-1 Fluidverteiler (100) mit den n Auswurfvorrichtungen zu verbinden.

12. Verteilersystem (200) eines Fluids nach dem vorhergehenden Anspruch, wobei die Fluidzuführmittel Folgendes umfassen:
- eine Hauptfluidzuführleitung (221), um den Eingang (1) eines ersten Verteilers (100a) mit einer Pumpe (310) zu verbinden, die mit einem Fluidbehälter (300) verbunden ist;
- eine Vielzahl von Fluidausgangleitungen (223), um jede Auswurfvorrichtung (210) mit einem Ausgang (2,3) eines Verteilers (100) zu verbinden;
- mindestens eine Zwischenleitung (222), um mindestens einen Ausgang (2,3) eines Verteilers (100a) und den Eingang (1) eines aufeinanderfolgenden Verteilers (100b) zu verbinden.

13. Verteilersystem (200) eines Fluids nach einem der beiden vorhergehenden Ansprüche, wobei die Auswurfvorrichtungen (210) Strahldüsen, Teleskopdüsen oder Oszillationsdüsen sind.

14. Verfahren zum Auswerfen eines Fluids an einer Auswurfvorrichtung (210) unter Verwendung des Fluidverteilersystems (200) nach einem der Ansprüche 12 bis 13, umfassend folgende Schritte:
- Aktivieren eines Stellglieds (4) mindestens eines Verteilers (100), um diesen in seinem geschalteten Zustand zu steuern, so dass die Hauptfluidzuführleitung (221) und die Auswurfvorrichtung (210) in fluidische Kommunikation gebracht werden;
- Betätigen der Pumpe (310), um das Fluid in das Verteilersystem (200) unter Druck zu setzen und es durch die Auswurfvorrichtung (210) auszuwerfen;
- Deaktivieren des Stellglieds (4), während das Fluid ausgeworfen wird.

15. Verfahren zum Auswerfen eines Fluids an einer Auswurfvorrichtung (210) nach dem vorhergehenden Anspruch, ferner umfassend folgenden Schritt:
- Stoppen der Pumpe (310), damit der Druck des Fluids im Verteilersystem (200) unter einem bestimmten Druck liegt, um den Fluidauswurf an der Auswurfvorrichtung (210) zu stoppen und um die Vielzahl n-1 von Verteilern (100) in ihren Ausgangszustand zurückzuführen.

## Claims

1. A fluid dispenser (100) comprising:
- a fluid inlet (1),
- a first outlet (2) and a first fluid communication path (21) between the inlet (1) and said first outlet (2),
- a second outlet (3) and a second fluid communication path (31) between the inlet (1) and said second outlet (3),
the dispenser (100) being configured to establish a fluid connection, either between the fluid inlet (1) and the first outlet (2), or between the fluid inlet (1) and the second outlet (3), and further comprising:
- an actuator (4) comprising a movable piston (41), capable of moving between an initial position and a switched position, wherein the piston (41) is arranged between a first (22) and a second (32) deformable diaphragm;
- the first diaphragm (22), one face (22a) of which is in contact with a first end of the piston (41) and the other face (22b) of which is intended to be in contact with the fluid, configured to close the first path (21) when the piston (41) is in its switched position, wherein the first path (21) is open when the piston (41) is in its initial position;
- the second diaphragm (32), one face (32a) of which is in contact with a second end of the piston (41) and the other face (32b) of which is intended to be in contact with the fluid, configured to close the second path (31) when the piston (41) is in its initial position; wherein the second path (31) is open when the piston (41) is in its switched position;
- a return element (42) for returning the piston (41) to its initial position when the actuator (4) is inactive and when the fluid pressure at the inlet of the dispenser (100) is lower than a determined pressure;
wherein the fluid contact surface of the first diaphragm (22) is less than that of the second diaphragm (32) when the piston (41) is in a switched position, and the contact surface with the fluid of the second diaphragm (32) is less than that of the first diaphragm (22) when the piston (41) is in the initial position;
and wherein the difference in surface area in contact with the fluid between the two diaphragms (22, 32) allows the piston (41) to be kept in its switched state, when the actuator (4) is inactive and when the fluid pressure at the inlet of the dispenser (100) is larger than said determined pressure;
the fluid dispenser being **characterized in that** the actuator (4) is an electromagnetic actuator comprising a coil (43) arranged around the piston (41).

2. The fluid dispenser (100) according to the preceding claim, wherein the determined pressure is between 1 bar and 15 bars.

3. The fluid dispenser (100) according to any one of the preceding claims, wherein the electromagnetic actuator (4) is
connected to an electrical connector (5)
of the dispenser (100) and adapted to control the movement of the piston (41) in its switched position.

4. The fluid dispenser (100) according to any one of the preceding claims, wherein the first (22) and second (32) diaphragms provide sealing respectively between a central body (6) of the dispenser and the first fluid communication path (21), and between the central body (6) and the second fluid communication path (31).

5. The fluid dispenser (100) according to the preceding claim, comprising:
- the central body (6) wherein the actuator (4) and an electrical connector (5) are arranged,
- a first body (7) comprising the first outlet (2) and all or part of the first fluid communication path (21),
- a second body (8) comprising the second outlet (3) and all or part of the second fluid communication path (31),
the inlet (1) of the dispenser being comprised in the first body (7), in the second body (8) or in the central body (6).

6. The fluid dispenser (100) according to the preceding claim, wherein the inlet (1) and the two outlets (2, 3) each have a central axis, and the central axes of the inlet and the two outlets are disposed in the same plane.

7. The fluid dispenser (100) according to the preceding claim, wherein the electrical connector (5) is disposed in the same plane as the central axes of the inlets (1) and outlets (2, 3).

8. The fluid dispenser (100) according to any one of the three preceding claims, wherein the first body (7) and the second body (8) are identical.

9. The fluid dispenser (100) according to any one of claims 5 to 8, wherein the central body (6), the first body (7) and the second body (8) are made of molded plastic material.

10. The fluid dispenser (100) according to any one of the preceding claims, wherein the inlet (1) and the two outlets (2, 3) each have a quick fluid connection tip, of the male or female type.

11. A distribution system (200) of a fluid in a vehicle, comprising:
- a plurality n of independent fluid ejection devices (210);
- a plurality n-1 of fluid dispensers (100), according to any one of the preceding claims, each being configured to establish a fluid connection either between the inlet (1) and the first outlet (2), or between the inlet (1) and the second outlet (3), respectively in an initial state and in a switched state;
- fluid supply means for connecting a fluid reservoir (300) to the n ejection devices, via the n-1 fluid dispensers (100).

12. The distribution system (200) for a fluid according to the preceding claim, wherein the fluid supply means comprise:
- a main fluid supply conduit (221) for connecting the inlet (1) of a first dispenser (100a) to a pump (310) connected to a fluid reservoir (300);
- a plurality of fluid outlet conduits (223) for connecting each ejection device (210) to an outlet (2,3) of a dispenser (100);
- at least one intermediate conduit (222) for connecting at least one outlet (2,3) of a dispenser (100a) and the inlet (1) of a consecutive dispenser (100b).

13. The distribution system (200) of a fluid according to any one of the two preceding claims, wherein the ejection devices (210) are jet nozzles, telescopic nozzles or oscillating nozzles.

14. A method for ejecting a fluid at an ejection device (210), using the fluid distribution system (200) according to any one of claims 12 to 13, comprising following steps:
- activating an actuator (4) of at least one dispenser (100) to control the latter in its switched state, so as to put the main fluid supply conduit (221) and the ejection device (210) into fluid communication;
- actuating the pump (310) to pressurize the fluid in the distribution system (200) and to eject it through said ejection device (210);
- deactivate the actuator (4), while the fluid ejection takes place.

15. The method for ejecting a fluid at an ejection device (210) according to the preceding claim, further comprising the following step:
- stopping the pump (310) such that the pressure of the fluid in the distribution system (200) is lower than a determined pressure, to stop the ejection of fluid at the ejection device (210) and to return the plurality n-1 of dispensers (100) to their initial state.
